(19) **Europäisches Patentamt**

**European Patent Office**

**Office européen des brevets**

(11) **EP 0 654 925 B1**

(12) **EUROPÄISCHE PATENTSCHRIFT**

(45) Veröffentlichungstag und Bekanntmachung des Hinweises auf die Patenterteilung:
**16.05.2001 Patentblatt 2001/20**

(51) Int Cl.⁷: $H04L\ 25/03$

(21) Anmeldenummer: **94115542.6**

(22) Anmeldetag: **04.10.1994**

(54) **Verfahren und Vorrichtung zur Nachführung der Stossantwort eines frequenzselektiven Kanals**

Method and system for tracking the impulse response of a frequency selective channel

Procédé et système pour poursuivre la réponse impulsionelle d'un canal sélectif en fréquence

(84) Benannte Vertragsstaaten:
**CH DE FR IT LI SE**

(30) Priorität: **23.11.1993 CH 349493**
**14.02.1994 CH 42394**

(43) Veröffentlichungstag der Anmeldung:
**24.05.1995 Patentblatt 1995/21**

(73) Patentinhaber: **Ascom Systec AG**
**5506 Mägenwil (CH)**

(72) Erfinder: **Liu, Weilin Dr.**
**CH-5442 Fislisbach (CH)**

(74) Vertreter:
**Roshardt, Werner Alfred, Dipl.-Phys. et al**
**Keller & Partner**
**Patentanwälte AG**
**Schmiedenplatz 5**
**Postfach**
**3000 Bern 7 (CH)**

(56) Entgegenhaltungen:
**EP-A- 0 023 056**    **EP-A- 0 487 029**

- **IEEE TRANSACTIONS ON ACOUSTICS, SPEECH, AND SIGNAL PROCESSING, Bd.34, Nr.2, April 1986 Seiten 309 - 316 HARRIS R. W. ET AL.: 'A Variable Step (VS) Adaptive Filter Algorithm'**
- **INTERNATIONAL CONFERENCE ON ACOUSTICS, SPEECH, AND SIGNAL PROCESSING - ICASSP'90, APRIL 3-6, 1990, ALBUQUERQUE, NEW MEXICO, US, Bd.2 Seiten 1133 - 1136 MAKINO S. ET AL.: 'Acoustic Echo Canceller Algorithm Based on the Variation Characteristics of a Room Impulse Response'**
- **1988 IEEE INTERNATIONAL SYMPOSIUM ON CIRCUITS AND SYSTEMS, JUNE 7-9, 1988, ESPOO, FINLAND, Bd.1 Seiten 771 - 774 CHEN J. ET AL.: 'A Mu-Vector LMS Adaptive System for Enhancing Nonstationary Narrow-Band Signal'**
- **PROCEEDINGS OF THE IEEE, Bd.73, Nr.9, September 1985, NEW YORK, US Seiten 1349 - 1387 QURESHI S. U. H.: 'Adaptive Equalization'**

## Beschreibung

### Technisches Gebiet

Die Erfindung betrifft ein Verfahren gemäss Oberbegriff des Anspruchs 1. Ferner betrifft die Erfindung eine Vorrichtung zur Durchführung des Verfahrens.

### Stand der Technik

Das entstehende digitale private Mobilfunksystem TETRA (Trans European Trunked Radio) basiert auf einem schmalbandigen, linearen Modulationssystem mit Nyquist Pulsformung und differentieller Phasencodierung. Die Vorteile dieses Systems liegen in der geringen Bandbreite resp. der spektralen Effizienz und der Einfachheit der differentiellen Demodulation.

Da die Symboldauer T eines schmalbandigen Systems in der Regel ziemlich lang ist, ist Mehrwegausbreitung mit zeitselektivem Schwund (multi path flat fading) der dominante Uebertragungseffekt. Bei solchen Uebertragungsbedingungen arbeitet die differentielle Demodulation nahezu gleich gut wie die ideale kohärente Demodulation.

In hügeligem Terrain beispielsweise kann Mehrwegausbreitung mit stark unterschiedlichen Laufzeiten auftreten. Dies führt zu einem Uebertragungskanal mit frequenzselektivem Schwund (frequency selective fading). Das empfangene Signal ist durch Intersymbolinterferenz (ISI) verzerrt. Dies führt bei differentieller Demodulation zu nicht reduzierbaren Bitfehlerraten.

Zur Bekämpfung von Intersymbolinterferenzen in Uebertragungskanälen mit frequenzselektivem Mehrwegausbreitungsschwund wird bei komplexen digitalen zellularen Mobilfunksystemen (wie z. B. dem europäischen System GSM oder dem amerikanischen IS-54) ein adaptiver Kanalabgleich (adaptive channel equalization) durchgeführt. Zu diesem Zweck werden z. B. Viterbi-Equalizer oder Fractionally spaced Decision Feedback Equalizer verwendet. Diese haben gewisse praktische Nachteile: Einerseits erfordern sie sehr grosse Rechenleistungen, was sich stark auf den Stromverbrauch resp. die Batterielebensdauer und die Hardwarekosten auswirkt, und andererseits leiden sie bei Flat Fading unter nicht vernachlässigbaren Performanceverlusten.

Adaptive Kanalequalizer mit entscheidungsgestützten Least Mean-square (LMS) oder Recursive Least Square (RLS) Nachführalgorithmen haben im allgemeinen zwei Nachteile. Erstens können sie bei Flat Fading - und zwar bedingt durch die rechnerische Kompensation von nicht existierenden Kanaltaps - beträchtliche Qualitätseinbussen erleiden. Zweitens sind sie bei Fast Fading mangelhaft wegen ihrer beschränkten Nachführfähigkeit.

Die Publikation PROCEEDINGS OF THE IEEE, Bd. 73, Nr. 9, September 1985, Seiten 1349-1387, Quereshi S. U. "Adaptive Equalization" gibt eine allgemeine Übersicht über die verschiedenen Methoden der adaptieven Equalizer für die Kompensation von Zeitdispersion in Übertragungskanälen. Unter anderem werden auch LMS-Equalizer mit konstanter Schrittgröße beschrieben.

IEEE TRANSACTIONS ON ACOUSTICS; SPEECH AND SIGNAL PROCEEDINGS, Bd. ASSP-34 Nr. 2 Abbild 1986, Seiten 309-316, Harris R. W. et al., beschreibt einen LMS-Algorithmus mit variabler Schrittgröße. Bei einem Transversalfilter wird eine unabhängige Feedback Konstante für jedes Filtergewicht berechnet. Der LMS-Algorithmus kann z. B. für einen Adaptive Noise Canceller oder einen Adaptive Line Enhancer verwendet werden.

### Darstellung der Erfindung

Aufgabe der Erfindung ist es nun, ein Verfahren der eingangs genannten Art anzugeben, das unter den üblichen Flat Fading-Bedingungen im wesentlichen gleich gut arbeitet wie z. B. die differentielle Demodulation, das aber viel robuster gegenüber frequenzselektivem Schwund ist. Das Verfahren soll vorzugsweise mit einem möglichst geringen Hardwareaufwand realisiert werden können.

Gemäss der Erfindung besteht die Lösung darin, dass bei einem Verfahren der genannten Art die einzelnen Stützwerte nach Massgabe des LMS-Prinzips gestützt auf - geschätzte, hypothetische oder bekannte - übertragene Daten mit je unterschiedlicher Schrittgrösse rekursiv nachgeführt werden.

Der Kern der Erfindung ist also in einer neuartigen rekursiven Kanalschätzung zu sehen. Im Unterschied zu konventionellen LMS-Verfahren, bei denen alle Kanaltaps mit derselben Schrittgrösse nachgeführt werden, arbeitet die Erfindung mit verschiedenen Schrittgrössen für verschiedene Taps. Das erfindungsgemässe Verfahren wird deshalb Tap-Variable Step-Size LMS, kurz TVSS-LMS genannt.

Vorzugsweise werden die Stützwerte

$$\vec{c}_{n+1\,|\,n}$$

im wesentlichen nach den Formeln (I) bis (IV) der angehängten Formelsammlung ermittelt (β = Forgettingfaktor; $v_i$ = Schrittgrösse;

$$\vec{alpha}_n = Daten;$$

$e_n$ = Schätzfehler).

Gemäss der Erfindung gibt es dabei mindestens zwei Schrittgrössen $v_i > 0$, $v_j > 0$ ($i \neq j$), für die $v_i \neq v_j$ gilt.

Die Schrittgrösse kann der Einfachheit halber entsprechend einer mittleren Energie einer Stützstelle festgelegt werden. D. h. je grösser die mittlere Energie einer Stützstelle desto grösser die Schrittweite (eine Proportionalität ist zwar denkbar, stellt aber nur eine von vielen Varianten dar). In der Regel wird einer der Stützwerte (Hauptstützstelle) viel grösser (z. B. viermal grösser) als jeder andere Stützwert sein. Das Verhältnis zwischen dem grössten und dem zweitgrössten Stützwert beträgt vorzugsweise mindestens 3:2.

Der Forgettingfaktor β ist ein Mass für die Kanalkorrelation. Für Mobilfunksysteme wird er vorzugsweise entsprechend der systemspezifischen max. Dopplerfrequenz $f_d$ bemessen:

$$\beta \approx \exp(-2\pi f_d T), \text{ wobei } T = \text{Symboldauer}$$

β ist geringfügig kleiner als 1, z. B. $0.97 \leq \beta \leq 0.995$. Ein bevorzugter Bereich liegt für TETRA bei $0.980 \leq \beta \leq 0.985$.

Dieser Bereich entspricht einer Fahrzeuggeschwindigkeit in der Grössenordnung von 100-150 km/h. Obwohl β nur sehr wenig von 1 verschieden ist, wirkt sich dies sehr positiv auf die Gesamtperformance aus.

Gemäss einer besonders bevorzugten Ausführungsform werden die Kanaltaps (Stützstellen/Stützwerte) und die Datensymbole gemeinsam bestimmt (Joint Detection). Die rekursive Nachführung der Kanaltaps erfolgt dabei auf der Basis von (vorläufigen) Datenhypothesen. Die definitive Schätzung erfolgt (in an sich bekannter Weise) nach Massgabe einer vorgegebenen Metrik und unter Zuhilfenahme eines Viterbi-Algorithmus. Die Fehlerfortpflanzung wird auf diese Weise weitgehend vermieden und es lassen sich sehr gute Resultate erreichen.

Es können aber auch durchaus einfachere Verfahren mit Rückführung einer endgültigen oder temporären Entscheidung gewählt werden (nicht Joint Detection). Anhand dieser temporären oder endgültigen Entscheidung wird die Kanalschätzung nachgeführt, worauf die Daten (unter Zugrundelegung der nachgeführten definitiven Kanalschätzung) ermittelt werden.

Im Sinne der zweitgenannten Möglichkeit ist z. B. ein Verfahren zur linearen Demodulation eines schmalbandigen Empfangssignals, das sich durch folgende Kombination von Verfahrensschritten auszeichnet:

a) Das Empfangssignal wird zunächst einer Intersymbolinterferenzkompensation unterworfen;

b) aus dem kompensierten Empfangssignal werden mittels einer differentiellen Phasendemodulation geschätzte Symbole ermittelt;

c) auf der Basis der geschätzten Symbole und des Empfangssignals wird eine Kanalschätzung durchgeführt, auf deren Basis wiederum die Intersymbolinterferenzkompensation gemäss Schritt a) erfolgt.

Bei dieser Ausführungsform wird die (konventionelle) differentielle Demodulation im wesentlichen beibehalten, wobei allfällige Intersymbolinterferenzen durch eine vorgeschaltete ISI-Kompensation abgefangen werden. Die Vorteile dieses Verfahrens basieren zur Hauptsache darauf, dass die allfällig auftretenden Laufzeitunterschiede in der Regel nicht grösser als eine Symboldauer sind. Vorzugsweise ist deshalb die Intersymbolinterferenzkompensation einstufig.

Ist die Intersymbolinterferenz stärker (z. B. wegen einer im Vergleich zur Datenrate hohen Echoverzögerung), dann wird vorzugsweise ein zweistufiges Kompensationsverfahren angewendet.

Mit der Kanalschätzung werden adaptiv zwei Koeffizienten z. B. nach den Least Mean Square-Prinzip (LMS) ermittelt. Bei einem besonders bevorzugten, an die differentielle Phasendemodulation angepassten Kompensationsverfahren werden die Formeln (V) bis (VII) (rekursiv) ausgewertet, wobei

$$0 \leq \mu_0 \leq 1 \text{ (Schrittgrösse)}$$

$$0 s \mu_1 \leq 1 \text{ (Schrittgrösse)}$$

$$\beta \leq 1 \text{ (Forgettingfaktor).}$$

$\hat{d}_n$ bezeichnet dabei die (einem bestimmten Symbol entsprechende) geschätzte Phasendifferenz, $r_n$ das Empfangssignal und $\hat{x}_1(n)$ den vom Empfangssignal $r_n$ zu subtrahierenden Kompensationsterm. Die Schrittgrössen $\mu_0$, $\mu_1$ und der Forgettingfaktor $\beta$ sind in den genannten Grenzen geeignet festzulegen. Vorteilhafte Bemessungsregeln für die Schrittgrössen folgen weiter unten.

Eine zweistufige Intersymbolinterferenzkompensation kann nach demselben Prinzip durchgeführt werden, wobei die Formeln (VIII) bis (XI) anzuwenden sind.

Es ist zu beachten, dass nunmehr nicht nur $\hat{d}_n$, sondern auch $\hat{d}_{n-1}$ in die Schätzung einbezogen wird und dass eine zusätzliche Schrittgrösse $\mu_2$ festzusetzen ist (mit $0 \leq \mu_2 \leq 1$).

Mit diesem an die differentielle Demodulation angepassten TVSS-LMS-Verfahren wird einerseits die Qualität der Schätzung verbessert und andererseits die Zahl der elementaren Operationen (Addition, Multiplikation) für das Kanaltracking um nahezu 20% reduziert. Die erfindungsgemäss verbesserte differentielle Demodulation erfordert insgesamt etwa nur viermal soviele Operationen wie die einfache differentielle Demodulation und ist somit von äusserst niedriger Komplexität.

$\mu_0$ und $\mu_1$ sind Schrittgrössen im Bereich zwischen 0 und 1. Vorzugsweise sind sie sehr viel kleiner als 1 ($\mu_0$ liegt z. B. zwischen 0.05 und 0.5). Gemäss der Erfindung sind sie verschieden gross (z. B. $\mu_1 < 2/3\ \mu_0$). Das dem leistungsstärksten Pfad des Kanals zugeordnete $\mu_0$ wird dabei grösser als das $\mu_1$ gesetzt. Die beiden Schrittgrössen sind gewissermassen für die Trägheit des Systems verantwortlich. Bei einem zweistufigen Verfahren wird $\mu_2$ in ähnlicher Weise wie $\mu_1$ festgelegt. (Um Missverständnisse auszuschliessen sei betont, dass $\mu_0$, $\mu_1$, $\mu_2$ nichts anderes als spezielle Werte der oben allg. als Schrittgrösse definierten Parameter $v_i$, $i = 0, ..., L$ sind.)

Beim verbesserten TVSS-LMS-Verfahren für die differentielle Demodulation werden

a) aus Basisbandsignal und geschätzter Phasendifferenz die Grössen $\hat{x}_1(n+1)$ und ggf. $\hat{x}_2(n+1)$ gemäss den obigen Gleichungen berechnet,

b) die errechneten Werte um ein Abtastintervall verzögert und vom Basisbandsignal subtrahiert,

c) das kompensierte Basisbandsignal mit seinem um ein Intervall verzögerten konjugiert komplexen Signalanteil multipliziert und

d) mit einem Entscheider die geschätzte Phasendifferenz ermittelt.

Zur Initialisierung der Kanalschätzung wird vorzugsweise eine bekannte Trainingssequenz des übertragenen Signals verwendet.

Grundsätzlich ist die erfindungsgemässe Kanalschätzung sowohl in linearen als auch in nichtlinearen Demodulationsverfahren einsetzbar. Sie beschränkt sich auch nicht auf die Anwendung bei schmalbandigen Systemen (wie z. B. TETRA), die typischerweise mit weniger als 100 kHz, insbesondere weniger als 50 kHz (z. B. 25 kHz) arbeiten. Einem Einsatz in breitbandigen Systemen (wie z. B. DECT, GSM o. dgl.), die im MHz-Bereich arbeiten, steht prinzipiell nichts entgegen. Von Interesse sind ganz allgemein Mobilfunksysteme, bei denen eine ständige Nachführung der Kanalschätzung erforderlich ist.

Die erfindungsgemässen Verfahrensschritte lassen sich vollständig auf digitaler Stufe realisieren. Es können somit Signalverarbeitungsprozessoren an sich bekannter Art verwendet werden, die jedoch in erfindungsgemässer Weise programmiert sind. Es ist zu beachten, dass das erfindungsgemässe Demodulationsverfahren senderseitig keine Aenderungen der Modulation erfordert. Bei einem Mobilfunksystem mit ein oder mehreren Basisstationen (bekannter Art) können also problemlos erfindungsgemässe Mobilfunkempfänger eingesetzt werden.

Aus der Detailbeschreibung und der Gesamtheit der Ansprüche ergeben sich weitere vorteilhafte Ausführungsformen und Merkmalskombinationen der Erfindung. Die an die Beschreibung angehängte Formelsammlung ist dabei integraler Bestandteil der Unterlagen.

**Kurze Beschreibung der Zeichnungen**

Nachfolgend soll die Erfindung anhand von Ausführungsbeispielen und im Zusammenhang mit den Zeichnungen näher erläutert werden. Es zeigen:

Fig. 1    Eine blockschaltbildmässige Darstellung des Modells für einen frequenzselektiven Fading Kanal;

Fig. 2     eine Empfängerstruktur für die gemeinsame Detektion (Joint Detection) von Kanalstossantwort und Daten;

Fig. 3     ein Blockschaltbild zur Erläuterung des Grundkonzeptes einer verbesserten differentiellen Demodulation;

Fig. 4     ein Blockschaltbild des an die differentielle Demodulation angepassten TVSS-LMS-Verfahrens;

Fig. 5     Bitfehlerraten für einen HT-Kanal bei einem Laufzeitunterschied von tau = 0.26T für konventionelle differentielle Demodulation, Joint Detection mit konventioneller LMS-Detektion und Joint Detection mit TVSS-LMS-Detektion;

Fig. 6     Bitfehlerraten für die in Fig. 5 dargestellten Detektionsverfahren bei einem Flat Fading-Kanal mit tau = 0;

Fig. 7     Bitfehlerraten für die drei genannten Detektionsverfahren bei verschiedenen Laufzeitunterschieden tau.

Fig. 8     Bitfehlerraten der konventionellen differentiellen Demodulation und der verbesserten differentiellen Demodulation bei verschwindendem Laufzeitunterschied tau = 0 (flat fading);

Fig. 9     Bitfehlerraten der konventionellen differentiellen Demodulation und der verbesserten differentiellen Demodulation bei einem Laufzeitunterschied von tau = 0.26T;

Fig. 10     Bitfehlerraten von konventioneller differentieller Demodulation und verbesserter differentieller Demodulation für verschiedene Laufzeitunterschiede.

**Wege zur Ausführung der Erfindung**

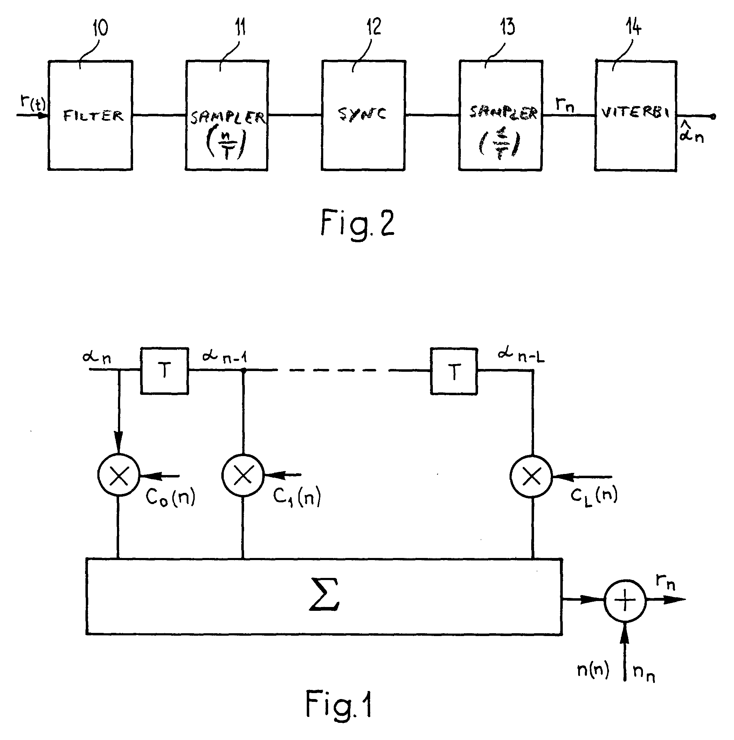

Fig. 1 veranschaulicht das der Erfindung zugrunde liegende digitale Modell des frequenzselektiven Kanals. $alpha_n$, ..., $alpha_{n-L}$ bezeichnet eine Sequenz von L+1 zu übertragenden Daten im Abtastintervall n. Die Daten haben eine Symboldauer T und werden entsprechend den L+1 Kanaltaps $c_0(n)$, ..., $c_L(n)$ verzerrt und mit einem additiven Rauschanteil $n_n$ zu einem Empfangssignal $r_n$ überlagert. Die Kanaltaps, im folgenden auch Stützstellen oder Stützwerte genannt, ändern von Abtastintervall zu Abtastintervall und müssen deshalb im Rahmen der nachfolgend beschriebenen Demodulation empfängerseitig ständig nachgeführt werden.
Gemäss der Erfindung werden die Stützwerte $c_i(n)$ im wesentlichen gemäss den bereits erwähnten Formeln (I) bis (IV) rekursiv aufdatiert.
Dies besagt folgendes: Die Voraussage (prediction) für die i-te Stützstelle im Abtastintervall n+1 berechnet sich aus dem für das vorangegangene Intervall n vorausgesagten Stützwert $\hat{c}_i(n|n-1)$ und dem - je nach Umständen hypothetischen, geschätzten oder tatsächlichen - Datenwert $alpha_{n-i}$, welcher mit einem Schätzfehler $e_n$ und einer Schrittweite $2v_i$ multipliziert ist. Der für das Abtastintervall n geschätzte Stützwert $\hat{c}_i(n|n-1)$ ist dabei mit einem Forgettingfaktor $\beta$ gewichtet.
Der wichtigste Punkt an der Gleichung (I) ist, dass die Schrittgrösse für jede Stützstelle individuell festgelegt ist. Vorzugsweise ist sie entsprechend der mittleren Energie der jeweiligen Stützstelle. In der praktischen Anwendung wird dies dazu führen, dass bei der rekursiven Voraussage gemäss Gleichung (I) der energiereichste Pfad mit viel grösserer Schrittweite aufdatiert wird, als alle anderen.
Die Schrittweiten $v_i$ können streng formal gemäss den Formeln (XII) und (XIII) festgelegt sein.
$rho_{ii}$ ist im wesentlichen der mittlere quadratische Schätzfehler für den i-ten Stützwert. Sigma $^2w$ ist die Varianz des additiven Gauss'schen Rauschens.
Der Schätzfehler $e_n$ ergibt sich aus dem Empfangssignal $r_n$, der jeweiligen Datensequenz

$$\overrightarrow{alpha}_n$$

und der vorangegangenen Voraussage der Stützwerte $\hat{c}_i(n|n-1)$, i = 0, ..., L gemäss Formeln (XIV) und (XV).
Wenn die Kanalstatistik 2. Ordnung bekannt ist, können die Schrittgrössen $v_i$ berechnet werden. Aus Kostengründen ist es aber in der Praxis nicht sehr vorteilhaft, die Kanalstatistik 2. Ordnung im Empfänger fortlaufend zu bestimmen. Besser und einfacher ist es, die Schrittweiten im voraus zu bestimmen und dann im System fest zu installieren.
Mit Blick auf Gleichung (XII) sollte die Schrittweite proportional zum mittleren quadratischen Schätzfehler (Mean-Square Prediction Error) sein. Unter der Voraussetzung unabhängiger Kanalstützstellen gilt, dass Stützstellen mit hoher mittleren Leistung einen hohen mittleren quadratischen Schätzfehler aufweisen. Es ist deshalb vorteilhaft, die Schrittgrössen in Abhängigkeit ihrer mittleren Energie festzulegen.

Bei schmalbandigen Datenübertragungssystemen wie z. B. TETRA ist es nicht wahrscheinlich, dass stark verzögerte Signale mit hoher mittlerer Leistung empfangen werden. Daher wird es in der Regel eine dominante Stützstelle (main tap) mit ziemlich grosser mittlerer Leistung und mehrere Vor- bzw. Nachläufer mit relativ kleiner mittlerer Leistung geben. In solchen Systemen dürfte es genügen, der Hauptstützstelle eine grosse und den übrigen eine beträchtlich kleinere Schrittweite zuzuordnen.

Der Forgettingfaktor β beschreibt die Kanalkorrelation zwischen zwei aufeinanderfolgenden Symbolintervallen. Er wird optimalerweise entsprechend der max. Dopplerfrequenz $f_d$ gemäss Formel (XVI) festgelegt.

Versuche haben gezeigt, dass es genügt, die max. mögliche Dopplerfrequenz (entsprechend z. B. einer max. Fahrtgeschwindigkeit des Mobilfunkteilnehmers von 150 km/h) festzulegen, ohne dass nennenswerte Verluste für den Fall hingenommen werden müssten, dass die effektive Dopplerfrequenz kleiner ist.

Die Feinabstimmung der in Frage stehenden Parameter kann mit Hilfe von Computersimulationen durchgeführt werden.

Je nachdem in welches Demodulationsschema die erfindungsgemässe Gleichung (I) eingebettet ist, spricht man von einer Joint Detection oder einer mit Entscheidungsrückführung. Im folgenden wird zunächst ein Ausführungsbeispiel für die Joint Detection und dann ein solches für die Entscheidungsrückführung gegeben. Selbstverständlich kann mit der erfindungsgemässen Gleichung auch die Initialisierung der Stützwerte durchgeführt werden, wenn (zusammen mit den zu detektierenden Daten) eine bekannte Trainingssequenz übertragen wird.

Fig. 2 zeigt ein Blockschaltbild eines Empfängers. Das (zeitkontinuierliche) Empfangssignal r(t) wird mit einem Empfangsfilter 10 (z. B. einem Root Raised Cosine) gefiltert und dann mit einem Fractionally Spaced Sampler 11 abgetastet. Es folgt eine Synchronisationsschaltung 12 und ein mit der Symboldauer T abtastender Sampler 13. Das resultierende zeitdiskrete Empfangssignal $r_n$ wird mit einem Viterbi-Equalizer 14 verarbeitet. Ausgegeben werden die geschätzten Datensymbole $\hat{alpha}_n$.

Die Synchronisationsschaltung 12 führt die Burst- und Symbolsynchronisation in an sich bekannter Weise auf der Basis einer vorbekannten Trainingssequenz durch. Sie gibt auch eine erste Schätzung des Kanals für den Viterbi-Equalizer ab. Empfangsfilter 10 bis Sampler 13 sind aus dem Stand der Technik bekannte Schaltungsteile.

Gemäss der Erfindung führt der Viterbi-Equalizer eine gemeinsame Schätzung der Daten und der Kanalstützwerte durch. Von den bekannten auf dem Viterbi-Algorithmus basierenden Verfahren unterscheidet sich das erfindungsgemässe Verfahren dadurch, dass die Nachführung der Kanalstützwerte innerhalb des Viterbi-Equalizers gemäss der Gleichung (I) erfolgt. Nachgeführt wird dabei auf der Basis der Datenhypothesen (und nicht der definitiv geschätzter Daten). D. h. jeder Knoten k, k = 0, ..., $M^K$-1 (K = Gedächtnislänge, M = Symbolwertigkeit) im Viterbi-Algorithmus arbeitet mit einer eigenen Stützstellensequenz

$$\vec{\hat{c}}^{(k)}_{n|n-1}$$

geschätzt mit einer eigenen Datensequenz

$$\vec{\hat{alpha}}^{(k)}_{n|n-1}.$$

Beim Uebergang von n nach n+1 wird für jeden neuen Knoten in an sich bekannter Weise derjenige Pfad mit der besten Metrik ausgewählt (die übrigen werden eliminiert). Schliesslich wird jeweils das letzte Datensymbol im Datenregister des momentan besten Knotens als definitive Schätzung abgegeben. Als nächstes wird eine Ausführungsform beschrieben, bei welcher die Schätzung des Kanals auf der Basis endgültig geschätzter Daten ermittelt wird.

Im folgenden wird aufgrund der Schmalbandeigenschaften des betrachteten Systems davon ausgegangen, dass der Laufzeitunterschied tau (Verzögerung in der Mehrwegausbreitung), welcher zu einer Intersymbolinterferenz führt, auf maximal eine Symboldauer T begrenzt ist. Die Energie der Intersymbolinterferenz ist daher in der Regel auf sehr wenige Symbole beschränkt. Beim vorliegenden Ausführungsbeispiel wird mit einem Kanalmodell mit zwei Stützstellen (taps) gearbeitet. Die entsprechenden Koeffizienten $h_0(n)$, $h_1(n)$ sind zwei komplexwertige Gauss'sche Zufallsvariablen, deren Amplituden eine Rayleigh-Verteilung aufweisen. Der Koeffizient $h_1(n)$ ist dabei für die Intersymbolinterferenz verantwortlich. Falls $h_1(n) = 0$ für alle n, liegt sogenanntes Flat Fading vor, für welches die differentielle Demodulation mit der Entscheidungsvariablen $d_n = r_n(r_{n-1})^*$ weitgehend optimal ist (der hochgestellte Stern bezeichnet konjugiert komplexe Grössen).

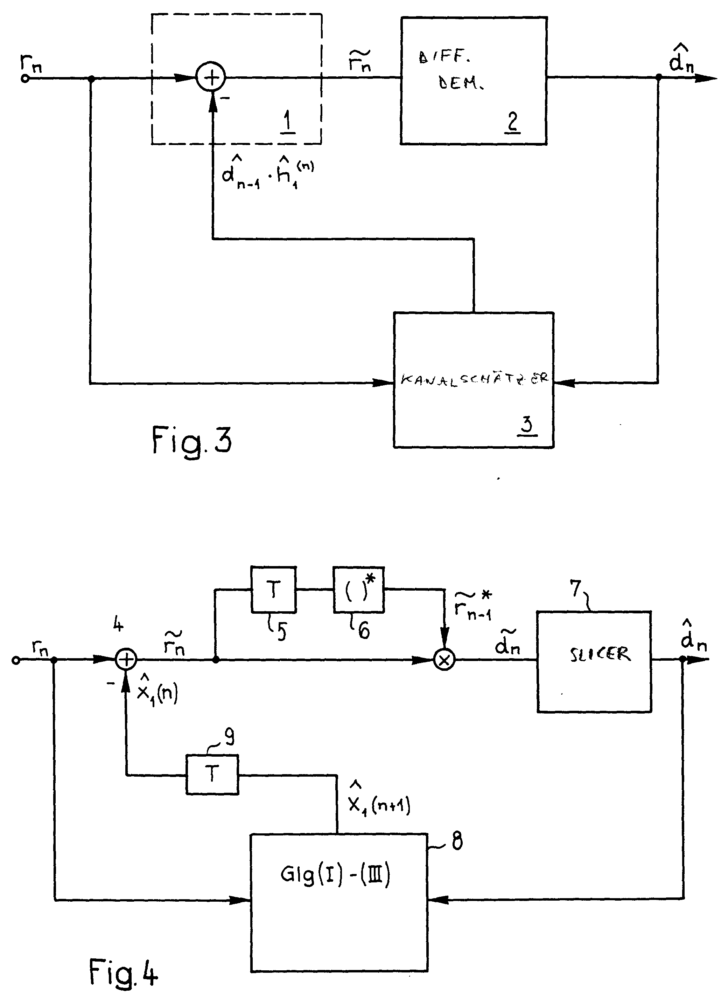

Es ergibt sich somit das in Fig. 3 gezeigte Blockschaltbild. Das in an sich in an bekannter Weise von einem (in Fig. 3 nicht dargestellten) Matched Filter gelieferte zeitdiskrete Empfangssignal $r_n$ wird in einem ISI-Kompensator 1 von der Intersymbolinterferenz befreit. Es resultiert ein kompensiertes Signal $\tilde{r}_n$. Ein nachfolgender differentieller Demodulator 2 ermittelt (in an sich bekannter Weise) eine geschätzte Phasendifferenz $d_n$. Ein Kanalschätzer 3 ermittelt aus dem diskreten Empfangssignal $r_n$ und der Entscheidungsvariablen $d_n$ einen Kompensationsterm von der Form $\hat{alpha}_{n-1} h_1(n)$, welcher im ISI-Kompensator 1 von $r_n$ subtrahiert wird.

Für das erfindungsgemässe differentielle Demodulationsverfahren muss das erste Tap $h_0(n)$ nicht kompensiert werden. Es muss jedoch geschätzt werden, um eine zuverlässige Schätzung von $h_1(n)$ zu gewährleisten.

Bei einer Kanalzugriffsregelung nach dem TDMA-Prinzip (Time Division Multiple Access) beinhaltet jeder übertragene Burst eine Anzahl bekannter Datensymbole (Trainingssequenz) zwecks Synchronisation des Bursts. Im Rahmen der vorliegenden Ausführungsform kann diese Trainingssequenz zur Erzeugung einer ersten Schätzung des Kanals verwendet werden. Danach kann ein Tracking Mode eingeschaltet werden.

Es gibt zwei allgemein bekannte Tracking-Verfahren, nämlich das nach dem LMS (Least Mean Square)-Prinzip und das nach dem RLS (Recursive Least Square)-Prinzip. Im allgemeinen bietet RLS ein schnelleres Nachführen als LMS, was aber mit höherer Komplexität erkauft werden muss. Im Rahmen der Erfindung wird ein einfaches LMS-Verfahren bevorzugt, da es sich zeigt, dass das zu berechnende 2-Tap-FIR-Filter mit zu RLS vergleichbaren Eigenschaften aufwarten kann.

Fig. 4 zeigt ein Blockschaltbild eines besonders einfachen Empfängers. Vom zeitdiskreten Empfangssignal $r_n$ wird in einem Subtrahierer 4 ein Kompensationsterm $x_1(n)$ subtrahiert. Das resultierende Signal $\tilde{r}_n$ wird einerseits in einem Verzögerungsglied 5 verzögert und in einem Umformer 6 in seinen konjugiert komplexen Wert überführt, um dann mit dem andererseits unverzögerten Signal $\tilde{r}_n$ multipliziert zu werden.

Die resultierende Grösse $\hat{d}_n$ wird einem Slicer 7 zugeführt, welcher die gesuchte Phasendifferenzschätzung $d_n$ durchführt. Ein Rechner 8 berechnet aus dem Empfangssignal $r_n$ und der geschätzten Phasendifferenz $d_n$ den Kompensationsterm $x_1(n+1)$, welcher in einem Verzögerungsglied 9 um eine Symboldauer verzögert und dann dem Subtrahierer 4 zugeführt wird. Der Rechner 8 bestimmt den Kompensationsterm $x_1(n+1)$ adaptiv (und rekursiv) auf der Bais der Gleichungen (V) bis (VII).

Bei grösseren Laufzeitunterschieden, wie sie z. B. bei Gleichwellenfunk an der Zellengrenze auftreten können, ist es vorteilhaft, eine zweistufige Kompensation im Sinne der Gleichungen (VIII) bis (XI) durchzuführen. Vom Empfangssignal $r_n$ wird dann im Sinn der Formel (XVII) zusätzlich der Kompensationsterm $x_2(n)$ subtrahiert.

Der Rechner arbeitet dann natürlich gemäss den Gleichungen (VIII) bis (XI). In der allgemeineren Darstellung gemäss Fig. 3 führt die zweistufige Kompensation zu der in Formel (XVIII) dargestellten Korrektur.

Es wurden Simulationen auf der Basis von TETRA durchgeführt, wobei die Trägerfrequenz auf 450 MHz und die Baud-Rate auf 18 kHz festgelegt wurden (vgl. dazu TETRA Dokumente 05.02, 05.03 und 05.05). Das Modulationsschema war eine $\pi/4$-DQPSK (Differential Quaternary Phase Shift Keying). Das Empfängerfilter war an das Transmitterfilter angepasst, welches eine sog. "root raised cosine"-Spektralcharakteristik mit einem roll-off-Faktor von 0.35 hatte. Die Daten wurden in Bursts übertragen. Jeder Burst enthielt 128 Datensymbole, angeführt von einer 12-Symbol-Trainingssequenz. Das Kanalmodell war ein Zweistrahl-Kanal mit unkorreliertem Rayleigh Fading gemäss TETRA. Der zweite Strahl war durchschnittlich 8.6 dB schwächer als der erste.

Die Simulation der Joint Detection wurde mit einer Gedächtnislänge K = 2 des Viterbi-Algorithmus durchgeführt (16 Zustände). Im Prinzip kann die Zahl L der Stützstellen unabhängig von K gewählt werden. L = K erweist sich aber als gute Wahl, um bei mässiger Komplexität eine gute Performance zu erreichen.

Der Zweistrahlkanal mit einer relativen Verzögerung tau = 0.26T entspricht dem für TETRA spezifizierten HT-Ausbreitungsmodell (hilly terrain propagation model). Es zeigt sich, dass für diesen Kanal bei einem Signalrauschabstand $E_S/N_0$ = 30 dB ein breiter Bereich vorhanden ist, in welchem die drei Schrittgrössen ohne relevante Verschlechterung der Fehlerrate variiert bzw. festgesetzt werden können. Im Rahmen der vorliegenden Simulationen wurden die Schrittweiten auf 0.25 für die Hauptstützstelle (Main Tap) und auf 0.06 bzw. 0.04 für die beiden übrigen Stützstellen festgesetzt (und zwar jeweils entsprechend der Energien der Stützstellen bei der anfänglichen Kanalschätzung). Der Forgettingfaktor $\beta$ betrug 0,977. Bei dem als Vergleich herangezogenen LMS-Verfahren wurde die optimale Schrittgrösse auf v = 0.1 festgesetzt. Die Parameter wurden für alle Verzögerungen tau und für alle Signalrauschabstände beibehalten.

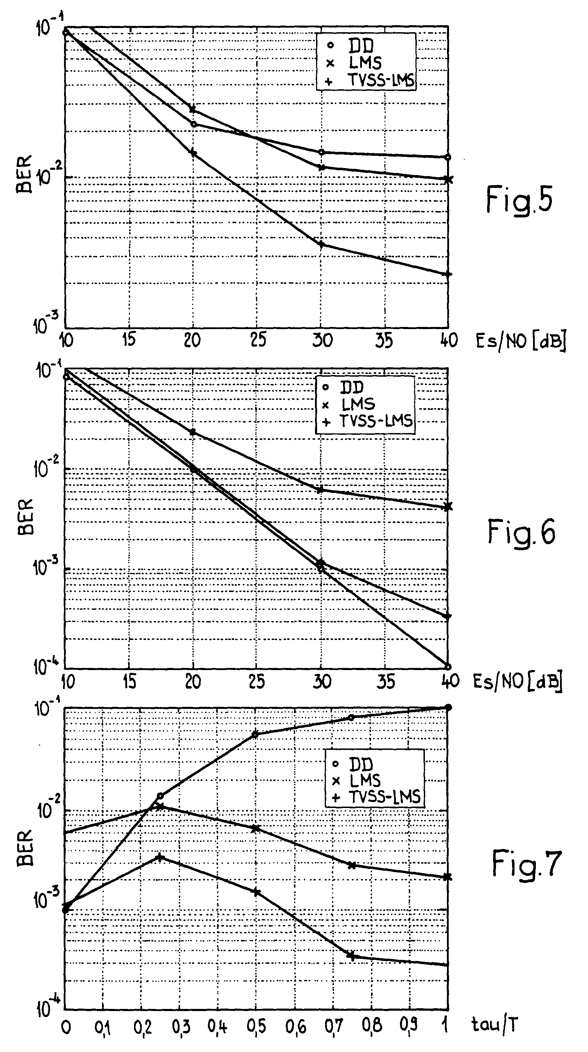

In den Fig. 5 bis 7 sind die Bitfehlerraten (BER) für verschiedene Signal-Rauschabstände und verschiedene Verzögerungen tau dargestellt. Die erfindungsgemässe Joint Detection mit TVSS-LMS wurde mit der Joint Detection mit konventioneller LMS und der konventionellen differentiellen Demodulation (DD) verglichen (Kurven "TVSS-LMS", "LMS" und "DD").

Fig. 5 zeigt die Bitfehlerrate für den HT-Kanal mit tau = 0.26T. Die differentielle Demodulation hat eine Untergrenze (Bit Error Rate Floor) von etwa 1.5 E-2. Konventionelles LMS ist bei hohem Signalrauschabstand nur geringfügig besser als die konventionelle differentielle Demodulation. Mit dem TVSS-LMS-Verfahren lässt sich die Untergrenze um mehr als einen Faktor 6 reduzieren. Dies macht deutlich, dass das Kanaltracking-Verfahren (Tracking Algorithm) sehr wichtig für die Performance des Empfängers ist. Die beim konventionellen LMS stützstellenunabhängige Schrittgrösse wird dem Uebertragungssystem offensichtlich in keiner Weise gerecht.

Fig. 6 zeigt die Bitfehlerraten für einen Flat Fading-Kanal mit tau = 0. Da es keine Intersymbolinterferenz gibt, ist die differentielle Demodulation weitgehend optimal. Es ist ein bekanntes Phänomen, dass unter solchen Umständen ein Equalizer, der versucht, nicht existierende Kanalstützstellen zu bestimmen, zu einer starken Beeinträchtigung der Performance führt. Dies ist auch aus Fig. 6 zu ersehen, wo die Joint Detection mit konventioneller LMS ziemlich schlecht dasteht. Die erfindungsgemässe Joint Detection mit TVSS-LMS dagegen hat in einem grossen Bereich nahezu die gleiche Performance wie die differentielle Demodulation. Diese Eigenschaft ist sehr wichtig für TETRA, da der Kanal durch das Flat Fading dominiert ist und nur in 10-20% der Fälle eine Intersymbolinterferenz auftritt. Joint Detection mit TVSS-LMS ist daher bei Flat Fading etwa gleich gut wie das weitgehend optimale DD-Verfahren, hat aber im HT-Kanal eine viel bessere Performance.

Fig. 7 zeigt die Bitfehlerrate für verschiedene Verzögerungen tau. Der Signalrauschabstand betrug 30 dB. Die Intersymbolinterferenz nimmt mit der Verzögerung tau zu. Von daher steigt die Bitfehlerrate bei der differentiellen Demodulation schnell an. Der Vorteil eines Kanalequalizers wird mit zunehmender Verzögerung offensichtlicher. Es zeigt sich aber auch hier, dass TVSS-LMS in jedem Fall viel besser als das konventionelle LMS-Verfahren ist.

Im folgenden werden noch Simulationsresultate gezeigt, die eine Gegenüberstellung der konventionellen differentiellen Demodulation und der erfindungsgemässen Demodulation mit Intersymbolinterferenzkompensation erlaubt. Die Schrittgrössen wurden wie folgt festgesetzt: $\mu_0$ = 0.18, $\mu_1$ = 0.08, $\beta$ = 0.98 (d. h. Fahrzeuggeschwindigkeit $v \approx$ 130 km/h. Bei der Simulation wurde eine Fahrzeuggeschwindigkeit von 150 km/h verwendet. (Es ist zu beachten, dass die reale Fahrzeuggeschwindigkeit von der im Modell angenommenen, d. h. der für den $\beta$-Faktor massgeblichen, in der Praxis meist verschieden ist.)

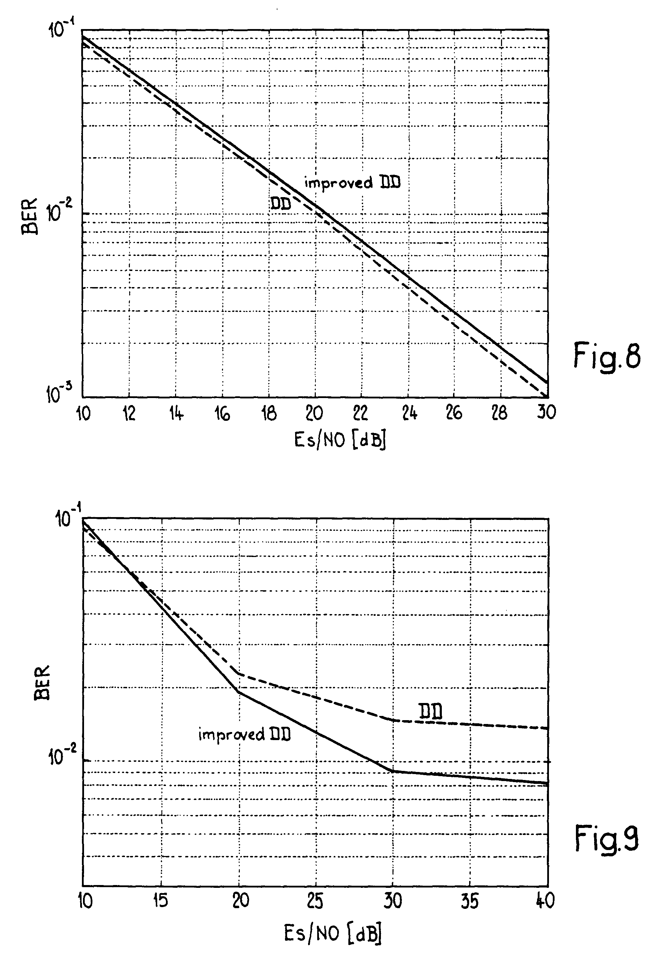

Fig. 8 und 9 zeigen die ermittelten Bitfehlerraten (BER) bei differentieller Demodulation und bei erfindungsgemässer Demodulation je für je für einen Laufzeitunterschied tau = 0 und tau = 0.26T (T = Symboldauer) und für verschiedene Signalrauschabstände $E_S/N_0$. Bei verschwindendem Laufzeitunterschied tau = 0 gibt es keine Intersymbolinterferenz. In diesem Fall ist die konventionelle differentielle Demodulation optimal (siehe Kurve "DD"). Allerdings ist die Verschlechterung der Bitfehlerrate, die von der - in diesem Fall unnötigen - Kanalschätzung und ISI-Kompensation herrührt, ziemlich gering (vgl. Fig. 8, Kurve "Improved DD").

Für tau = 0.26T wird der Kanal schwach frequenzselektiv (vgl. Fig. 9).

Die erfindungsgemässe Demodulation reduziert die Untergrenze der Bitfehlerrate ca. um einen Faktor 2 (Kurve "Improved DD" bei $E_S/N_0$ = 40 dB).

Aus den Fig. 8 und 9 ergibt sich somit, dass das erfindungsgemässe Verfahren bei einem Flat Fading-Kanal im wesentlichen gleich gut wie die gewöhnliche differentielle Demodulation, bei frequenzselektivem Schwund jedoch eindeutig besser ist.

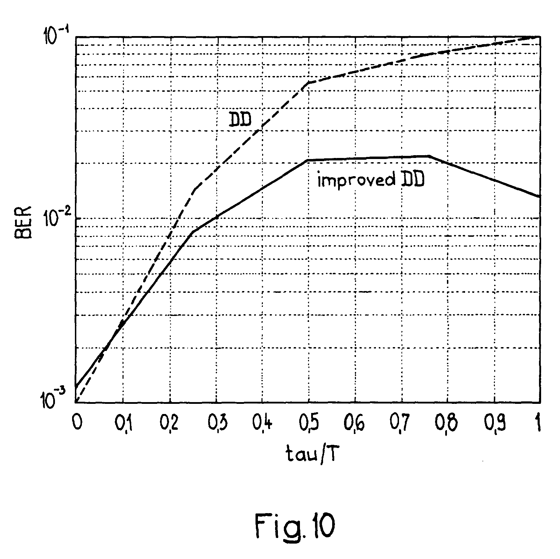

Der Vorteil der Erfindung zeigt sich besonders bei grossen Laufzeitunterschieden. Fig. 10 zeigt die Bitfehlerrate der differentiellen Demodulation und der erfindungsgemäss verbesserten Demodulation bei verschiedenen Verzögerungen tau. Der Signalrauschabstand betrug 30 dB.

Aus Fig. 10 ist zu erkennen, dass bei geringen Verzögerungen die erfindungsgemässe Demodulation (Kurve "Improved DD") nahezu so gut wie die gewöhnliche differentielle Demodulation (Kurve DD) arbeitet. Jenseits eines Laufzeitunterschiedes von tau = 0.20T ist die erfindungsgemässe Demodulation klar besser als die konventionelle. Insbesondere bei grossen Verzögerungen, wo die Bitfehlerrate bei konventioneller differentieller Demodulation nicht mehr tolerierbar ist, kann die Bitfehlerrate mit der erfindungsgemässen Demodulation unter 2% gehalten werden.

Bei den soeben erläuterten Simulationen wurde eine ziemlich hohe Fahrzeuggeschwindigkeit zugrundegelegt. Es ist allgemein bekannt, dass die differentielle Demodulation in einem grossen Bereich ziemlich unempfindlich ist bezüglich der Fahrzeuggeschwindigkeit. Da jedoch mit abnehmender Fahrzeuggeschwindigkeit die Genauigkeit der Kanalschätzung besser wird, ist zu erwarten, dass die Performance der erfindungsgemässen Demodulation noch besser ist, als in den Fig. 9 und 10 gezeigt.

Zusammenfassend kann festgehalten werden, dass durch die Erfindung ein verbessertes Demodulationsverfahren geschaffen worden ist, welches bei Flat Fading nahezu so gut wie die differentielle Demodulation arbeitet, aber robuster gegenüber frequenzselektivem Fading ist. Das erfindungsgemässe Verfahren bietet einen guten Ausgleich zwischen Bitfehlerrate, Robustheit und Komplexität. Aufgrund des geringen bis mässigen Rechenaufwands und der entsprechend geringen Rechenleistung ist das Verfahren vorzüglich zur Anwendung in einem privaten Mobilfunksystem mit Handapparaten geeignet.

Formelsammlung

$$\vec{\tilde{c}}_{n+1|n} = F\vec{\tilde{c}}_{n|n-1} + V\vec{\alpha}_n^* 2e_n \qquad (I)$$

$$\vec{\tilde{c}}_{n|n-1} = \{\hat{c}_0(n|n-1), \hat{c}_1(n|n-1), \cdots, \hat{c}_L(n|n-1)\}^T \qquad (II)$$

$$F \simeq \begin{pmatrix} \beta & 0 & 0 & 0 \\ 0 & \beta & 0 & 0 \\ \cdots & \cdots & \cdots & \cdots \\ 0 & 0 & 0 & \beta \end{pmatrix} \qquad (III)$$

$$V = \begin{pmatrix} \nu_0 & 0 & 0 & 0 \\ 0 & \nu_1 & 0 & 0 \\ \cdots & \cdots & \cdots & \cdots \\ 0 & 0 & 0 & \nu_L \end{pmatrix} \qquad (IV)$$

$$e_n = \ddot{d}_n \hat{x}_0(n) + \hat{x}_1(n) - r_n \qquad (V)$$

$$\hat{x}_0(n + 1) = \ddot{d}_n \beta \hat{x}_0(n) + 2\mu_0 e_n \qquad (VI)$$

$$\hat{x}_1(n + 1) = \ddot{d}_n(\beta \hat{x}_1(n) + 2\mu_1 e_n) \qquad (VII)$$

$$e_n = \hat{d}_n \hat{x}_0(n) + \hat{x}_1(n) + \hat{d}_{n-1}^* \hat{x}_2(n) - r_n \qquad (VIII)$$

$$\hat{x}_0(n + 1) = \ddot{d}_n \beta \hat{x}_0(n) + 2\mu_0 e_n \qquad (IX)$$

$$\hat{x}_1(n + 1) = \ddot{d}_n(\beta \hat{x}_1(n) + 2\mu_1 e_n) \qquad (X)$$

$$\hat{x}_2(n + 1) = \ddot{d}_{n-1}(\beta \hat{x}_2(n) + 2\mu_2 e_n) \qquad (XI)$$

$$\nu_i = \frac{\beta \bar{\rho}_{ii}}{2\delta}, \qquad i = 0, 1, \cdots, L \qquad (XII)$$

$$\delta = \sum_{i=0}^{L} \bar{\rho}_{ii} + \sigma_w^2 \qquad (XIII)$$

$$e_n = r_n - \vec{\alpha}_n^T \vec{\tilde{c}}_{n|n-1} \qquad (XIV)$$

$$\vec{\alpha}_n = \{\alpha_n, \alpha_{n-1}, \cdots, \alpha_{n-L}\}^T \qquad (XV)$$

$$\beta = e^{-2\pi f_d T} \qquad (XVI)$$

$$\tilde{r}_n = r_n - \hat{x}_1(n) - \hat{x}_2(n) \qquad (XVII)$$

$$\tilde{r}_n = r_n - \hat{\alpha}_{n-1}\hat{h}_1(n) - \hat{\alpha}_{n-2}\hat{h}_2(n) \qquad (XVIII)$$

**Bezugszeichenliste**

1   ISI-Kompensator
2   differentieller Demodulator
3   Kanalschätzer
4   Subtrahierer
5   Verzögerungsglied
6   Umformer
7   Slicer
8   Rechner
9   Verzögerungsglied
10   Empfangsfilter
11   Sampler
12   Synchronisationsschaltung
13   Sampler
14   Viterbi-Equalizer

**Patentansprüche**

1. Verfahren zur Berechnung einer Stossantwort eines ein Empfangssignal ($r_n$) übertragenden frequenzselektiven Kanals, insbesondere zur Verwendung bei der Demodulation des Empfangssignals, dadurch gekennzeichnet, daß

   a) eine vorgegebene Anzahl L von Stützwerten ($c_0$,...,$c_L$) der Stossantwort nach Massgabe des LMS-Prinzips gestützt auf übertragene Daten ($\vec{\alpha}_n$) mit je unterschiedlicher Schrittgröße rekursiv nachgeführt werden,

b) wobei geschätzte Stützwerte $\hat{c}_i(n+1|n)$ nach den folgenden Formeln (I) bis (IV) ermittelt werden:

$$\vec{\hat{c}}_{n+1|n} = F\vec{\hat{c}}_{n|n-1} + V\vec{\alpha}_n^* 2e_n \qquad\qquad \text{(I)}$$

$$\vec{\hat{c}}_{n|n-1} = \left\{ \hat{c}_0(n|n-1), \hat{c}_1(n|n-1), ...., \hat{c}_L(n|n-1) \right\}^T \qquad\qquad \text{(II)}$$

$$F = \begin{pmatrix} \beta & 0 & 0 & 0 \\ 0 & \beta & 0 & 0 \\ . & . & . & . \\ 0 & 0 & 0 & \beta \end{pmatrix} \qquad\qquad \text{(III)}$$

$$V = \begin{pmatrix} v_0 & 0 & 0 & 0 \\ 0 & v_1 & 0 & 0 \\ . & . & . & . \\ 0 & 0 & 0 & v_L \end{pmatrix} \qquad\qquad \text{(IV)}$$

wobei

$\beta$ = Forgettingfaktor
$v_i$ = Schrittgrösse
$\vec{\alpha}_n = (\alpha_n,..., \alpha_{n-L})$ = Daten
$e_n$ = Schätzfehler

und der hochgestellte * bedeutet "konjugiert komplex"

c) der Forgettingfaktor $\beta$ entsprechend einer systemspezifischen maximalen Dopplerfrequenz $f_d$ bemessen wird und geringfügig kleiner als 1 ist.

2. Verfahren nach Anspruch 1, dadurch gekennzeichnet, daß der Forgettingfaktor $\beta$ entsprechend der systemspezifischen Dopplerfrequenz $f_d$ wie folgt bemessen wird:

$$\beta \approx \exp(-2\pi f_d T), \text{ T = Symboldauer.}$$

3. Verfahren nach Anspruch 1 oder 2, dadurch gekennzeichnet, daß der Forgettingfaktor $\beta$ zwischen 0.975 und 1 legt.

4. Verfahren nach einem der Ansprüche 1 bis 3, dadurch gekennzeichnet, daß die Schrittgröße ($v_i$) entsprechend einer mittleren Energie einer jeweiligen Stützstelle $c_i(n)$ festgelegt wird.

5. Verfahren nach einem der Ansprüche 1 bis 4, dadurch gekennzeichnet, daß eine gemeinsame Schätzung der Stützwerte und der Datensymbole mit Hilfe eines Viterbi-Algorithmus durchgeführt wird.

6. Verfahren nach einem der Ansprüche 1 bis 4, insbesondere zur Demodulation eines schmalbandigen Empfangssignals, gekennzeichnet durch die Kombination folgender Schritte:

d) Das Empfangssignal ($r_n$) wird zunächst einer Intersymbolinterferenzkompensation (1) unterworfen;

e) aus dem kompensierten Empfangssignal ($\tilde{r}_n$) werden mittels einer differentiellen Phasendemodulation (2) geschätzte Symbole ($d_n$) ermittelt;

f) auf der Basis der geschätzten Symbole ($\hat{d}_n$) und des Empfangssignals ($r_n$) wird die Kanalschätzung (3) durchgeführt, auf deren Basis wiederum die Intersymbolinterferenzkompensation (1) gemäss Schritt d) erfolgt.

**7.** Verfahren nach Anspruch 6, dadurch gekennzeichnet, daß die Intersymbolinterferenzkompensation (1) ein- oder zweistufig ist.

**8.** Verfahren nach Anspruch 6, dadurch gekennzeichnet, daß mindestens zwei Koeffizienten $\hat{x}_0(n+1)$, $\hat{x}_1(n+1)$, resp. $x_0(n+1)$, $x_1(n+1)$, $x_2(n+1)$, auf der Basis der nachfolgenden Formeln (V) bis (VII) resp. (VIII) bis (XI) rekursiv geschätzt werden:

$$e_n = \ddot{d}_n \hat{x}_0(n) + \hat{x}_1(n) - r_n \qquad (V)$$

$$\hat{x}_0(n+1) = \ddot{d}_n \beta \hat{x}_0(n) + 2\mu_0 e_n \qquad (VI)$$

$$\hat{x}_1(n+1) = \ddot{d}_n(\beta \hat{x}_1(n) + 2\mu_1 e_n) \qquad (VII)$$

bzw.

$$e_n = \hat{d}_n \hat{x}_0(n) + \hat{x}_1(n) + \hat{d}_{n-1}^* \hat{x}_2(n) - r_n \qquad (VIII)$$

$$\hat{x}_0(n+1) = \ddot{d}_n \beta \hat{x}_0(n) + 2\mu_0 e_n \qquad (IX)$$

$$\hat{x}_1(n+1) = x\ddot{d}_n(\beta \hat{x}_1(n) + 2\mu_1 e_n) \qquad (X)$$

$$\hat{x}_2(n+1) = \ddot{d}_{n-1}(\beta \hat{x}_2(n) + 2\mu_2 e_n) \qquad (XI)$$

wobei

$0 \le \mu_0 \le 1$, *Schrittgrösse*
$0 \le \mu_1 \le 1$, *Schrittgrösse*
$0 \le \mu_2 \le 1$, *Schrittgrösse*
$0 \le \beta \le 1$, *Forgettingfaktor*
$r_n$ = *Empfangssignal*
$d_n$ = *Entscheidungs variable*

**9.** Verfahren nach Anspruch 8 ,dadurch gekennzeichnet, daß die Schrittgröße $\mu_0 \ge \mu_1$ ist und daß $\mu_0$ sehr viel kleiner als 1 ist, insbesondere daß $\mu_0$ zwischen 0.05 und 0.5 liegt.

**10.** Verfahren nach einem der Ansprüche 7 bis 9, dadurch gekennzeichnet, daß

g) aus Basisbandsignal ($r_n$) und geschätzter Phasendifferenz ein Kompensationsterm $\hat{x}_1(n+1)$ berechnet wird,

h) der Kompensationsterm $\hat{x}_1(n+1)$ um ein Abtastintervall verzögert und vom Basisbandsignal ($r_n$) subtrahiert wird,

i) das kompensierte Basisbandsignal ($\tilde{r}_n$) mit seinem um ein Intervall verzögerten, konjugiert komplexen Signalanteil multipliziert wird,

j) ein Entscheider die geschätzte Phasendifferenz ($\hat{d}_n$) ermittelt.

**11.** Verfahren nach einem der Ansprüche 1 bis 10, dadurch gekennzeichnet, daß zur Durchführung der Kanalschätzung eine bekannte Trainingsequenz im Empfangssignal verwendet wird.

**12.** Mobilfunkgerät mit einer Schaltungsanordnung zur Berechnung einer Stossantwort eines ein Empfangssignal ($r_n$) übertragenden frequenzselektiven Kanals zwecks Demodulation des Empfangssignals, gekennzeichnet durch

a) erste Mittel zum rekursiven Nachführen einer vorgegebenen Anzahl L von Stützwerten ($c_0,...,c_L$) der Stossantwort nach Massgabe des LMS-Prinzips gestützt auf übertragene Daten ($\vec{\alpha}_n$) mit je unterschiedlicher Schrittgröße,

b) zweite Mittel zur Berechnung geschätzter Stützwerte $\hat{c}_i(n+1|n)$ nach den folgenden Formeln (I) bis (IV):

$$\vec{\hat{c}}_{n+1|n} = F\vec{\hat{c}}_{n|n-1} + V\vec{\alpha}_n^{*}2e_n \qquad (I)$$

$$\vec{\hat{c}}_{n|n-1} = \left\{\hat{c}_0(n|n-1), \hat{c}_1(n|n-1),...., \hat{c}_L(n|n-1)\right\}^T \qquad (II)$$

$$F = \begin{pmatrix} \beta & 0 & 0 & 0 \\ 0 & \beta & 0 & 0 \\ . & . & . & . \\ 0 & 0 & 0 & \beta \end{pmatrix} \qquad (III)$$

$$V = \begin{pmatrix} v_0 & 0 & 0 & 0 \\ 0 & v_1 & 0 & 0 \\ . & . & . & . \\ 0 & 0 & 0 & v_L \end{pmatrix} \qquad (IV)$$

wobei

$\beta$ = Forgettingfaktor
$v_i$ = Schrittgrösse
$\vec{\alpha}_n = (\alpha_n,...,\alpha_{n-L})$ = Daten
$e_n$ = Schätzfehler

und der hochgestellte * bedeutet "konjugiert komplex"

c) wobei der Forgettingfaktor $\beta$ entsprechend einer systemspezifischen maximalen Dopplerfrequenz $f_d$ bemessen ist und geringfügig kleiner als 1 ist.

**13.** Mobilfunkgerät nach Anspruch 12, insbesondere zur Demodulation eines schmalbandigen Empfangssignals, gekennzeichnet durch

d) erste Mittel, mit welchen das Empfangssignal ($r_n$) zunächst einer Intersymbolinterferenzkompensation (1) unterworfen wird;

e) zweite Mittel, mit welchen aus dem kompensierten Empfangssignal ($\tilde{r}_n$) mittels einer differentiellen Phasendemodulation (2) geschätzte Symbole ($d_n$) ermittelt werden;

f) dritte Mittel, mit welchen auf der Basis der geschätzten Symbole ($\hat{d}_n$) und des Empfangssignals ($r_n$) die Kanalschätzung (3) durchgeführt wird, auf deren Basis wiederum die Intersymbolinterferenzkompensation (1) gemäss Schritt d) erfolgt.

**14.** Mobilfunkgerät nach Anspruch 12, gekennzeichnet durch

g) erste Mittel, mit welchen aus Basisbandsignal ($r_n$) und geschätzter Phasendifferenz ein Kompensationsterm $x_1(n+1)$ berechnet wird,

h) zweite Mittel, mit welchen der Kompensationsterm $\hat{x}_1(n+1)$ um ein Abtastintervall verzögert und vom Basisbandsignal ($r_n$) subtrahiert wird,

i) dritte Mittel, mit welchen das kompensierte Basisbandsignal ($\tilde{r}_n$) mit seinem um ein Intervall verzögerten, konjugiert komplexen Signalanteil multipliziert wird,

j) einen Entscheider, der die geschätzte Phasendifferenz ($\hat{d}_n$) ermittelt.

**15.** Mobilfunkgerät nach einem der Ansprüche 12 bis 14, dadurch gekennzeichnet, daß es für Empfangssignale mit einer Bandbreite von weniger als 100 kHz, vorzugsweise weniger als 50 kHz und insbesondere von ca. 25 kHz oder weniger ausgebildet ist.

**16.** Einrichtung mit mindestens einer Sendestation und mehreren mobilen Empfangsstationen, wobei die Einrichtung eine Schaltungsanordnung zur Berechnung einer Stossantwort eines ein Empfangssignal ($r_n$) übertragenden frequenzselektiven Kanals zwecks Demodulation des Empfangssignals aufweist, gekennzeichnet durch

a) erste Mittel zum rekursiven Nachführen einer vorgegebenen Anzahl L von Stützwerten ($c_0,...,c_L$) der Stossantwort nach Massgabe des LMS-Prinzips gestützt auf übertragene Daten ($\vec{\alpha}_n$) mit je unterschiedlicher Schrittgröße,

b) zweite Mittel zur Berechnung geschätzter Stützwerte $\hat{c}_i(n+1|n)$ nach den folgenden Formeln (I) bis (IV):

$$\vec{\hat{c}}_{n+1|n} = F\vec{\hat{c}}_{n|n-1} + V\vec{\alpha}_n^* 2e_n \qquad (I)$$

$$\vec{\hat{c}}_{n|n-1} = \left\{ \hat{c}_0(n|n-1), \hat{c}_1(n|n-1),....,\hat{c}_L(n|n-1) \right\}^T \qquad (II)$$

$$F = \begin{pmatrix} \beta & 0 & 0 & 0 \\ 0 & \beta & 0 & 0 \\ . & . & . & . \\ 0 & 0 & 0 & \beta \end{pmatrix} \qquad (III)$$

$$V = \begin{pmatrix} v_0 & 0 & 0 & 0 \\ 0 & v_1 & 0 & 0 \\ \cdot & \cdot & \cdot & \cdot \\ 0 & 0 & 0 & v_L \end{pmatrix} \hspace{4cm} \text{(IV)}$$

wobei

$\beta$ = Forgettingfaktor
$v_i$ = Schrittgrösse
$\vec{\alpha}_n = (\alpha_n,...,\alpha_{n-L})$ = Daten
$e_n$ = Schätzfehler

und der hochgestellte * bedeutet "konjugiert komplex"

c) wobei der Forgettingfaktor $\beta$ entsprechend einer systemspezifischen maximalen Dopplerfrequenz fd bemessen ist und geringfügig kleiner als 1 ist.

**17.** Einrichtung nach Anspruch 16, insbesondere zur Demodulation eines schmalbandigen Empfangssignals, gekennzeichnet durch

a) erste Mittel, mit welchen das Empfangssignal ($r_n$) zunächst einer Intersymbolinterferenzkompensation (1) unterworfen wird;

b) zweite Mittel, mit welchen aus dem kompensierten Empfangssignal ($\tilde{r}_n$) mittels einer differentiellen Phasendemodulation (2) geschätzte Symbole ($d_n$) ermittelt werden;

c) dritte Mittel, mit welchen auf der Basis der geschätzten Symbole ($\hat{d}_n$) und des Empfangssignals ($r_n$) die Kanalschätzung (3) durchgeführt wird, auf deren Basis wiederum die Intersymbolinterferenzkompensation (1) gemäss Schritt a) erfolgt.

**18.** Einrichtung nach Anspruch 16, gekennzeichnet durch

a) erste Mittel, mit welchen aus Basisbandsignal ($r_n$) und geschätzter Phasendifferenz ein Kompensationsterm $\hat{x}_1(n+1)$ berechnet wird,

b) zweite Mittel, mit welchen der Kompensationsterm $\hat{x}_1(n+1)$ um ein Abtastintervall verzögert und vom Basisbandsignal ($r_n$) subtrahiert wird,

c) dritte Mittel, mit welchen das kompensierte Basisbandsignal ($\tilde{r}_n$) mit seinem um ein Intervall verzögerten, konjugiert komplexen Signalanteil multipliziert wird,

d) einen Entscheider, der die geschätzte Phasendifferenz ($\hat{d}_n$) ermittelt.

**19.** Einrichtung nach Anspruch 16, dadurch gekennzeichnet, daß es für Empfangssignale mit einer Bandbreite von weniger als 100 kHz, vorzugsweise weniger als 50 kHz und insbesondere von ca. 25 kHz oder weniger ausgebildet ist.

**Claims**

**1.** Method for calculating an impulse response of a frequency-selective channel transmitting a reception signal ($r_n$), especially for use in the demodulation of the reception signal, characterised in that

a) a predetermined number L of taps ($c_o,..., c_L$) of the impulse response are tracked recursively in accordance with the LMS principle on the basis of transmitted data (an) with a different step size in each case,

b) estimated taps $\hat{c}_i(n + 1|n)$ being determined in accordance with the following formulae (I) to (IV):

$$\vec{\hat{c}}_{n+1|n} = F\vec{\hat{c}}_{n|n-1} + V\vec{\alpha}_n^* 2e_n \tag{I}$$

$$\vec{\hat{c}}_{n|n-1} = \left\{ \hat{c}_0(n|n-1), \hat{c}_1(n|n-1),....,\hat{c}_L(n|n-1) \right\}^T \tag{II}$$

$$F = \begin{pmatrix} \beta & 0 & 0 & 0 \\ 0 & \beta & 0 & 0 \\ . & . & . & . \\ 0 & 0 & 0 & \beta \end{pmatrix} \tag{III}$$

$$V = \begin{pmatrix} v_0 & 0 & 0 & 0 \\ 0 & v_1 & 0 & 0 \\ . & . & . & . \\ 0 & 0 & 0 & v_L \end{pmatrix} \tag{IV}$$

wherein

$\beta$ =     forgetting factor
$V_i$ =     step size
$\vec{\alpha}_n$ =     $(\alpha_n,...,\alpha_{n-L})$ = data
$e_n$ =     estimation error

and the superscript * means "complex conjugate",

c) the forgetting factor $\beta$ is dimensioned in accordance with a system-specific maximum Doppler frequency $f_d$ and is slightly smaller than 1.

2. Method according to claim 1, characterised in that the forgetting factor $\beta$ is dimensioned in accordance with the system-specific Doppler frequency $f_d$ as follows:

$$\beta \approx \exp(-2\pi f_d T), \text{ T = symbol duration.}$$

3. Method according to claim 1 or 2, characterised in that the forgetting factor $\beta$ lies between 0.975 and 1.

4. Method according to any one of claims 1 to 3, characterised in that the step size $(v_i)$ is fixed in accordance with an average energy of a respective tap $c_i(n)$.

5. Method according to any one of claims 1 to 4, characterised in that a joint estimation of the taps and the data , symbols is carried out using a Viterbi algorithm.

6. Method according to any one of claims 1 to 4, especially for demodulating a narrow-band reception signal, characterised by a combination of the following steps:

   d) the reception signal ($r_n$) is first of all subjected to an intersymbol interference compensation (1);

   e) estimated symbols ($\hat{d}_n$) are determined from the compensated reception signal ($\check{r}_n$) by means of a differential phase demodulation (2);

   f) the channel estimation (3) is carried out on the basis of the estimated symbols ($\hat{d}_n$) and the reception signal ($r_n$) and is in turn taken as a basis for effecting the intersymbol interference compensation (1) according to step d).

7. Method according to claim 6, characterised in that the intersymbol interference compensation (1) is one- or two-staged.

8. Method according to claim 6, characterised in that at least two coefficients $\hat{x}_0(n + 1)$, $\hat{x}_1(n + 1)$ and $\hat{x}_0(n + 1)$, $\hat{x}_1(n + 1)$, $x_2(n + 1)$ are estimated recursively on the basis of the following formulae (V) to (VII) and (VIII) to (XI), respectively:

$$e_n = \ddot{d}_n\hat{x}_0(n)+\hat{x}_1(n)-r_n \tag{V}$$

$$\hat{x}_0(n+1) = \ddot{d}_n\beta\hat{x}_0(n)+2\mu_0 e_n \tag{VI}$$

$$\hat{x}_1(n+1) = \ddot{d}_n(\beta\hat{x}_1(n)+2\mu_1 e_n) \tag{VII}$$

and

$$e_n = \hat{d}_n\hat{x}_0(n) + \hat{x}_1(n) + \hat{d}_{n-1}^*\hat{x}_2(n)-r_n \tag{VIII}$$

$$\hat{x}_0(n+1) = \ddot{d}_n\beta\hat{x}_0(n)+2\mu_0 e_n \tag{IX}$$

$$\hat{x}_1(n+1) = \ddot{d}_n(\beta\hat{x}_1(n)+2\mu_1 e_n) \tag{X}$$

$$\hat{x}_2(n+1) = \ddot{d}_{n-1}(\beta\hat{x}_2(n)+2\mu_2 e_n) \tag{XI}$$

respectively, wherein

   $0 \le \mu_0 \le 1$, step size
   $0 \le \mu_1 \le 1$, step size
   $0 \le \mu_2 \le 1$, step size
   $0 \le \beta \le 1$, forgetting factor
   $r_n$ = reception signal
   $d_n$ = decision variable.

9. Method according to claim 8, characterised in that the step size $\mu_0$ is $\ge \mu_1$ and in that $\mu_0$ is far smaller than 1, especially in that $\mu_0$ lies between 0.05 and 0.5.

10. Method according to any one of claims 7 to 9, characterised in that

   g) a compensation term $\hat{x}_1(n + 1)$ is calculated from the baseband signal ($r_n$) and the estimated phase difference,

h) the compensation term $\overset{\wedge}{x}_1(n + 1)$ is delayed by one sampling interval and is subtracted from the baseband signal ($r_n$),

i) the compensated baseband signal ($\check{r}_n$) is multiplied by its complex conjugate signal portion, which has been delayed by one interval,

j) a decider determines the estimated phase difference ($\overset{\wedge}{d}_n$).

**11.** Method according to any one of claims 1 to 10, characterised in that a known training sequence in the reception signal is used in order to carry out the channel estimation.

**12.** Mobile radiotelephone apparatus having a circuit arrangement for calculating an impulse response of a frequency-selective channel transmitting a reception signal ($r_n$), for the purpose of demodulating the reception signal, characterised by

a) first means for the recursive tracking of a predetermined number L of taps ($c_0,...,c_L$) of the impulse response in accordance with the LMS principle on the basis of transmitted data ($\vec{a}_n$) with a different step size in each case,

b) second means for calculating estimated taps $\overset{\wedge}{c}_i(n + 1|n)$ in accordance with the following formulae (I to (IV):

$$\vec{\hat{c}}_{n+1|n} = F\vec{\hat{c}}_{n|n-1} + V\vec{\alpha}_n^* 2e_n \qquad (I)$$

$$\vec{\hat{c}}_{n|n-1} = \left\{ \hat{c}_0(n|n-1), \hat{c}_1(n|n-1),....,\hat{c}_L(n|n-1) \right\}^T \qquad (II)$$

$$F = \begin{pmatrix} \beta & 0 & 0 & 0 \\ 0 & \beta & 0 & 0 \\ . & . & . & . \\ 0 & 0 & 0 & \beta \end{pmatrix} \qquad (III)$$

$$V = \begin{pmatrix} v_0 & 0 & 0 & 0 \\ 0 & v_1 & 0 & 0 \\ . & . & . & . \\ 0 & 0 & 0 & v_L \end{pmatrix} \qquad (IV)$$

wherein

$\beta = $ forgetting factor
$v_i = $ step size
$\alpha_n = $ $(\alpha_n, ...,\alpha_{n-L})$ = data
$e_n = $ estimation error

and the superscript $^*$ means "complex conjugate",

c) the forgetting factor $\beta$ being dimensioned in accordance with a system-specific maximum Doppler frequency $f_d$ and being slightly smaller than 1.

**13.** Mobile radiotelephone apparatus according to claim 12, especially for demodulating a narrow-band reception signal, characterised by

d) first means with which the reception signal ($r_n$) is first of all subjected to an intersymbol interference compensation (1);

e) second means with which estimated symbols ($\hat{d}_n$) are determined from the compensated reception signal ($\check{r}_n$) by means of a differential phase demodulation (2);

f) third means with which the channel estimation (3) is carried out on the basis of the estimated symbols ($\hat{d}_n$) and the reception signal ($r_n$) and is in turn taken as a basis for effecting the intersymbol interference compensation (1) according to step d).

**14.** Mobile radiotelephone apparatus according to claim 12, characterised by

g) first means with which a compensation term $\hat{x}_1(n + 1)$ is calculated from the baseband signal ($r_n$) and the estimated phase difference,

h) second means with which the compensation term $\hat{x}_1(n + 1)$ is delayed by one sampling interval and is subtracted from the baseband signal ($r_n$),

i) third means with which the compensated baseband signal ($\check{r}_n$) is multiplied by its complex conjugate signal portion, which has been delayed by one interval,

j) a decider which determines the estimated phase difference ($\hat{d}_n$).

**15.** Mobile radiotelephone apparatus according to any one of claims 12 to 14, characterised in that it is constructed for reception signals having a bandwidth of less than 100 kHz, preferably less than 50 kHz and especially approximately 25 kHz or less.

**16.** Device having at least one transmitting station and several mobile receiving stations, the device having a circuit arrangement for calculating an impulse response of a frequency-selective channel transmitting a reception signal ($r_n$), for the purpose of demodulating the reception signal, characterised by

a) first means for the recursive tracking of a predetermined number L of taps ($c_0,...,c_L$) of the impulse response in accordance with the LMS principle on the basis of transmitted data ($\vec{a}_n$) with a different step size in each case,

b) second means for calculating estimated taps $\hat{c}_i(n + 1|n)$ in accordance with the following formulae (I) to (IV) :

$$\vec{\hat{c}}_{n+1|n} = F\vec{\hat{c}}_{n|n-1} + V\vec{a}_n^{\bullet} 2e_n \tag{I}$$

$$\vec{\hat{c}}_{n|n-1} = \left\{ \hat{c}_0(n|n-1), \hat{c}_1(n|n-1),....,\hat{c}_L(n|n-1) \right\}^T \tag{II}$$

$$F = \begin{pmatrix} \beta & 0 & 0 & 0 \\ 0 & \beta & 0 & 0 \\ \cdot & \cdot & \cdot & \cdot \\ 0 & 0 & 0 & \beta \end{pmatrix} \quad \text{(III)}$$

$$V = \begin{pmatrix} v_0 & 0 & 0 & 0 \\ 0 & v_1 & 0 & 0 \\ \cdot & \cdot & \cdot & \cdot \\ 0 & 0 & 0 & v_L \end{pmatrix} \quad \text{(IV)}$$

wherein

$\beta =$  forgetting factor
$v_i =$  step size
$\vec{\alpha}_n =$  $(\alpha_n, ...,\alpha_{n-L})$ = data
$e_n =$  estimation error

and the superscript $^*$ means "complex conjugate",

c) the forgetting factor $\beta$ being dimensioned in accordance with a system-specific maximum Doppler frequency $f_d$ and being slightly smaller than 1.

**17.** Device according to claim 16, especially for demodulating a narrow-band reception signal, characterised by

a) first means with which the reception signal ($r_n$) is first of all subjected to an intersymbol interference compensation (1);

b) second means with which estimated symbols ($\hat{d}_n$) are determined from the compensated reception signal ($\breve{r}_n$) by means of a differential phase demodulation (2);

c) third means with which the channel estimation (3) is carried out on the basis of the estimated symbols ($\hat{d}_n$) and the reception signal ($r_n$) and is in turn taken as a basis for effecting the intersymbol interference compensation (1) according to step a).

**18.** Device according to claim 16, characterised by

a) first means with which a compensation term $\hat{x}_1(n + 1)$ is calculated from the baseband signal ($r_n$) and the estimated phase difference,

b) second means with which the compensation term $\hat{x}_1(n + 1)$ is delayed by one sampling interval and is subtracted from the baseband signal ($r_n$),

c) third means with which the compensated baseband signal ($\breve{r}_n$) is multiplied by its complex conjugate signal portion, which has been delayed by one interval,

d) a decider which determines the estimated phase difference ($\hat{d}_n$).

**19.** Device according to claim 16, characterised in that it is constructed for reception signals having a bandwidth of less than 100 kHz, preferably less than 50 kHz and especially approximately 25 kHz or less.

**Revendications**

1. Procédé pour calculer une réponse impulsionnelle d'un canal sélectif en fréquence, qui transmet un signal de réception ($r_n$), notamment pour son utilisation dans la démodulation du signal de réception, caractérisé en ce que

   a) un nombre prédéterminé L de valeurs d'appui ($c_0,...,c_L$) de la réponse impulsionnelle sont asservies de façon récursive, d'une manière assistée en fonction du principe LMS, sur des données transmises ($\vec{\alpha}_n$) avec une taille de pas respectivement différente,
   b) des valeurs d'appui estimées $\hat{c}_i(n+1|n)$ sont déterminées conformément aux formules suivantes (I) à (IV):

$$\vec{\hat{c}}_{n+1|n} \; = \; F\vec{\hat{c}}_{n|n-1} \; + \; V\vec{\alpha}_n^{\,*}2e_n \qquad\qquad (I)$$

$$\vec{\hat{c}}_{n|n-1} \; = \; \{\hat{c}_0(n|n-1),\hat{c}_1(n|n-1),\ldots,\hat{c}_L(n|n-1)\}^{\mathrm{T}} \qquad (II)$$

$$F \; = \; \begin{bmatrix} \beta & 0 & 0 & 0 \\ 0 & \beta & 0 & 0 \\ \cdot & \cdot & \cdot & \cdot \\ 0 & 0 & 0 & \beta \end{bmatrix} \qquad\qquad (III)$$

$$V \; = \; \begin{bmatrix} v_0 & 0 & 0 & 0 \\ 0 & v_1 & 0 & 0 \\ \cdot & \cdot & \cdot & \cdot \\ 0 & 0 & 0 & v_L \end{bmatrix} \qquad\qquad (IV)$$

   avec

   $\beta$ = facteur de forgetting
   $v_i$ = taille de pas
   $\vec{\alpha}_n = (\alpha_n,..., \alpha_{n-L})$ = données
   $e_n$ = erreur d'estimation

   le * en position haute signifiant "complexe conjugué",
   c) le facteur de forgetting $\beta$ est dimensionné conformément à une fréquence Doppler maximale $f_d$ spécifique au système et est légèrement inférieur à 1.

2. Procédé selon la revendication 1, caractérisé en ce que le facteur de forgetting $\beta$ est dimensionné conformément à la fréquence Doppler $f_d$, spécifique au système, comme suit:

$$\beta \approx \exp(-2\pi f_d T), \; T = \text{durée de symbole.}$$

3. Procédé selon la revendications 1 ou 2, caractérisé en ce que le facteur de forgetting est compris entre 0,975 et 1.

4. Procédé selon l'une des revendications 1 à 3, caractérisé en ce que la taille de pas ($v_i$) est fixée en fonction d'une énergie moyenne d'un point d'appui respectif $c_i(n)$.

5. Procédé selon l'une des revendications 1 à 4, caractérisé en ce qu'une estimation commune des valeurs d'appui et de symboles de données est exécutée à l'aide d'un algorithme de Viterbi.

6. Procédé selon l'une des revendications 1 à 4, notamment pour la démodulation d'un signal de réception à bande étroite, caractérisé par la combinaison des étapes suivantes:

    d) le signal de réception ($r_n$) est soumis tout d'abord à une compensation (1) d'interférences entre symboles;
    e) des symboles estimés ($d_n$) sont déterminés au moyen d'une démodulation de phase différentielle (2) à partir du signal de réception compensé ($\tilde{r}_n$);
    f) une estimation (3) de canal, sur la base de laquelle s'effectue à nouveau la compensation (1) d'interférences entre symboles conformément à l'étape d), est effectuée sur la base des symboles estimés ($d_n$) et du signal de réception ($r_n$).

**7.** Procédé selon la revendication 6, caractérisé en ce que la compensation (1) d'interférences entre symboles est à un étage ou à deux étages.

**8.** Procédé selon la revendication 6, caractérisé en ce qu'au moins deux coefficients $\hat{x}_0(n+1)$, $\hat{x}_1(n+1)$, ou $\hat{x}_0(n+1)$, $\hat{x}_1(n+1)$, $x_2(n+1)$ sont estimés de façon récursive sur la base des formules (V) à (VII) ou (VIII) à (XI) suivantes:

$$e_n = \ddot{d}_n \hat{x}_0(n) + \hat{x}_1(n) - r_n \tag{V}$$

$$\hat{x}_0(n+1) = \ddot{d}_n \beta \hat{x}_0(n) + 2\mu_0 e_n \tag{VI}$$

$$\hat{x}_1(n+1) = \ddot{d}_n(\beta \hat{x}_1(n) + 2\mu_0 e_n) \tag{VII}$$

ou

$$e_n = \hat{d}_n \hat{x}_0(n) + \hat{x}_1(n) + \hat{d}_{n-1}^* \hat{x}_2(n) - r_n \tag{VIII}$$

$$\hat{x}_0(n+1) = \ddot{d}_n \beta \hat{x}_0(n) + 2\mu_0 e_n \tag{IX}$$

$$\hat{x}_1(n+1) = \ddot{d}_n(\beta \hat{x}_i(n) + 2\mu_1 e_n) \tag{X}$$

$$\hat{x}_2(n+1) = \ddot{d}_{n-1}(\beta \hat{x}_2(n) + 2\mu_2 e_n) \tag{XI}$$

avec

    $0 \le \mu_0 \le 1$, taille de pas
    $0 \le \mu_1 \le 1$, taille de pas
    $0 \le \mu_2 \le 1$, taille de pas
    $0 \le \beta < 1$, facteur de forgetting
    $r_n$ = signal de réception
    $d_n$ = variable de décision.

**9.** Procédé selon la revendication 8, caractérisé en ce que la taille de pas est $\mu_0 \ge \mu_1$ et que $\mu_0$ est nettement inférieure à 1 et notamment que $\mu_0$ est comprise entre 0,05 et 0,5.

**10.** Procédé selon l'une des revendications 7 à 9, caractérisé en ce que

    g) un terme de compensation $\hat{x}_1(n+1)$ est calculé sur la base du signal de bande de base ($r_n$) et de la différence de phase estimée,
    h) le terme de compensation $\hat{x}_1(n+1)$ est retardé d'un intervalle d'échantillonnage et est soustrait du signal de bande de base ($r_n$),
    i) le signal de bande de base compensé ($\tilde{r}_n$) est multiplié par sa composante de signal complexe conjuguée retardée d'un intervalle,

j) un discriminateur détermine la différence de phase estimée ($\hat{d}_n$).

**11.** Procédé selon l'une des revendications 1 à 10, caractérisé en ce que pour effectuer l'estimation du canal, on utilise une fréquence d'entraînement connue dans le signal de réception.

**12.** Appareil radio mobile comportant un montage pour calculer une réponse impulsionnelle d'un canal sélectif en fréquence, transmettant un signal de réception ($r_n$), pour la démodulation du signal de réception, caractérisé par

a) des premiers moyens pour asservir de façon récursive un nombre prédéterminé L de valeurs d'appui ($c_0$,..., $c_L$) de la réponse impulsionnelle d'une manière assistée en fonction du principe LMS, sur des données transmises ($\vec{\alpha}_n$) avec une taille de pas respectivement différente,

b) des seconds moyens pour calculer des valeurs d'appui estimées $c_i(n+1|n)$ conformément aux formules suivantes (I) à (IV):

$$\vec{\hat{c}}_{n+1|n} = F\vec{\hat{c}}_{n|n-1} + V\vec{\alpha}^*_n 2e_n \qquad (I)$$

$$\vec{\hat{c}}_{n|n-1} = \{\hat{c}_0(n|n-1), \hat{c}_1(n|n-1), \ldots, \hat{c}_L(n|n-1)\}^T \qquad (II)$$

$$F = \begin{bmatrix} \beta & 0 & 0 & 0 \\ 0 & \beta & 0 & 0 \\ \cdot & \cdot & \cdot & \cdot \\ 0 & 0 & 0 & \beta \end{bmatrix} \qquad (III)$$

$$V = \begin{bmatrix} v_0 & 0 & 0 & 0 \\ 0 & v_1 & 0 & 0 \\ \cdot & \cdot & \cdot & \cdot \\ 0 & 0 & 0 & v_L \end{bmatrix} \qquad (IV)$$

avec

$\beta$ = facteur de forgetting
$v_i$ = taille de pas
$\vec{\alpha}_n = (\alpha_n, \ldots, \alpha_{n-L})$ = données
$e_n$ = erreur d'estimation

le $^*$ en position haute signifiant "complexe conjugué",

c) le facteur de forgetting $\beta$ étant dimensionné conformément à une fréquence Doppler maximale $f_d$ spécifique au système et étant légèrement inférieur à 1.

**13.** Appareil radio mobile selon la revendication 12, notamment pour la démodulation d'un signal de réception à bande étroite, caractérisé par

d) des premiers moyens à l'aide desquels le signal de réception ($r_n$) est soumis tout d'abord à une compensation (1) d'interférences entre symboles;

e) des seconds moyens, à l'aide desquels des symboles estimés ($d_n$) sont déterminés au moyen d'une démodulation de phase différentielle (2) à partir du signal de réception compensé ($\tilde{r}_n$);

f) des troisièmes moyens, à l'aide desquels l'estimation (3) de canal, sur la base de laquelle s'effectue à nouveau la compensation (1) d'interférences entre symboles conformément à l'étape d), est effectuée sur la base des symboles estimés ($d_n$) et du symbole de réception ($r_n$).

**14.** Appareil radio mobile selon la revendication 12, caractérisé par

g) des premiers moyens, à l'aide desquels un terme de compensation $\hat{x}_1(n+1)$ est calculé sur la base du signal de bande de base ($r_n$) et de la différence de phase estimée,

h) des seconds moyens, à l'aide desquels le terme de compensation $\hat{x}_1(n+1)$ est retardé d'un intervalle d'échantillonnage et est soustrait du signal de bande de base ($r_n$),

i) des troisièmes moyens, à l'aide desquels le signal de bande de base compensé ($\tilde{x}_n$) est multiplié par sa composante de signal complexe conjuguée retardée d'un intervalle,

j) un discriminateur qui détermine la différence de phase estimée ($d_n$).

**15.** Appareil radio mobile selon l'une des revendications 12 à 14, caractérisé en ce qu'il est conçu pour des signaux de réception possédant une largeur de bande inférieure à 100 kHz, de préférence inférieure à 50 kHz et notamment égale à environ 25 kHz ou moins.

**16.** Dispositif comportant au moins un poste d'émission et plusieurs postes de réception mobile, le dispositif comportant un montage pour calculer une réponse impulsionnelle d'un canal sélectif en fréquence, transmettant un signal de réception ($r_n$), pour la démodulation du signal de réception, caractérisé par

a) des premiers moyens pour asservir de façon récursive un nombre prédéterminé L de valeurs d'appui ($c_0$,..., $c_L$) de la réponse impulsionnelle d'une manière assistée en fonction du principe LMS, sur des données transmises ($\vec{\alpha}_n$) avec une taille de pas repectivement différente,

b) des seconds moyens pour calculer des valeurs d'appui estimées $c_i(n+1|n)$ conformément aux formules suivantes (I) à (IV) :

$$\vec{\hat{c}}_{n+1|n} = F\vec{\hat{c}}_{n|n-1} + V\vec{\alpha}^*_n 2e_n \qquad (I)$$

$$\vec{\hat{c}}_{n|n-1} = \{\hat{c}_0(n|n-1), \hat{c}_1(n|n-1), \ldots, \hat{c}_L(n|n-1)\}^T \qquad (II)$$

$$F = \begin{bmatrix} \beta & 0 & 0 & 0 \\ 0 & \beta & 0 & 0 \\ \cdot & \cdot & \cdot & \cdot \\ 0 & 0 & 0 & \beta \end{bmatrix} \qquad (III)$$

$$V = \begin{bmatrix} v_0 & 0 & 0 & 0 \\ 0 & v_1 & 0 & 0 \\ \cdot & \cdot & \cdot & \cdot \\ 0 & 0 & 0 & v_L \end{bmatrix} \qquad (IV)$$

avec

$\beta$ = facteur de forgetting
$v_i$ = taille de pas
$\vec{\alpha}_n = (\alpha_n, \ldots, \alpha_{n-L})$ = données
$e_n$ = erreur d'estimation

et le $^*$ en position haute signifiant "complexe conjugué",

c) le facteur de forgetting $\beta$ étant dimensionné conformément à une fréquence Doppler maximale $f_d$ spécifique au système et est légèrement inférieur à 1.

**17.** Dispositif selon la revendication 16, notamment pour la démodulation d'un signal de réception à bande étroite, caractérisé par

a) des premiers moyens, à l'aide desquels le signal de réception ($r_n$) est0 soumis tout d'abord à une compensation (1) d'interférences entre symboles;

b) des seconds moyens, à l'aide desquels des symboles estimés ($d_n$) sont déterminés au moyen d'une démodulation de phase différentielle (2) à partir du signal de réception compensé ($\tilde{r}_n$);

c) des troisièmes moyens, à l'aide desquels l'estimation (3) de canal, sur la base de laquelle s'effectue à nouveau la compensation (1) d'interférences entre symboles conformément à l'étape a), est effectuée sur la base des symboles estimés ($d_n$) et du symbole de réception ($r_n$).

18. Dispositif selon la revendication 16, caractérisé par

a) des premiers moyens, à l'aide desquels un terme de compensation $\hat{x}_1(n+1)$ est calculé sur la base du signal de bande de base ($r_n$) et de la différence de phase estimée,

b) des seconds moyens, à l'aide desquels le terme de compensation $\hat{x}_1(n+1)$ est retardé d'un intervalle d'échantillonnage et est soustrait du signal de bande de base ($r_n$),

c) des troisièmes moyens, à l'aide desquels le signal de bande de base compensé ($\tilde{r}_n$) est multiplié par sa composante de signal complexe conjuguée retardée d'un intervalle,

d) un discriminateur qui détermine la différence de phase estimée ($d_n$).

19. Dispositif selon la revendication 16, caractérisé en ce qu'il est conçu pour des signaux de réception ayant une largeur de bande inférieure à 100 kHz, de préférence inférieure à 50 kHz et notamment égale à environ 25 kHz ou moins.

Fig. 2

Fig. 1

Fig. 3

Fig. 4

Fig.5

Fig.6

Fig.7

Fig.8

Fig.9

Fig. 10